# EUROPÄISCHE PATENTANMELDUNG

(11) **EP 0 721 804 A2**
(43) Veröffentlichungstag der Anmeldung: **17.07.1996**
(21) Anmeldenummer: 95118496.9
(22) Anmeldetag: 24.11.1995
(51) Int. Cl.: B05B 15/12

(54) **Sprühbeschichtungsvorrichtung**

(30) Priorität: 13.01.1995 DE 19500873
(71) Anmelder: Gema Volstatic AG, CH-9015 St. Gallen (CH)
(72) Erfinder: Fischli, Gallus, CH-9327 Tübach (CH); Gelain, Silvano, CH-9030 Abtwil (CH); Lenherr,Markus, CH-9212 Arnegg (CH)
(74) Vertreter: Vetter, Ewald Otto, Dipl.-Ing.

(57) **Zusammenfassung**

Sprühbeschichtungsvorrichtung zum Sprühbeschichten von Objekten mit Beschichtungspulver in einer Kabine. Die Kabine bildet einen Beschichtungsraum (6), welcher unten durch Pulversammelmittel begrenzt ist. Die Pulversammelmittel sind auf innere Sammelmittel (34.2) und auf sie umgebende äußere Sammelmittel (34.1) zum getrennten Sammeln von Überschußpulver und zum getrennten Entfernen des gesamten Überschußpulvers aus der Kabine aufgeteilt. Die äußeren Sammelmittel (34.1) sammeln das von den Kabinenwand-Innenflächen (40) abfallende Beschichtungspulver. Die inneren Sammelmittel (34.2) sammeln das Überschußpulver, welches die Kabinenwand-Innenflächen (40) nicht berührt hat.

## Beschreibung

Die Erfindung betrifft eine Sprühbeschichtungsvorrichtung gemäß Anspruch 1.

Die Sprühbeschichtungsvorrichtung nach der Erfindung zum Sprühbeschichten von Objekten mit Beschichtungspulver eignet sich insbesondere zum automatischen Sprühbeschichtungsbetrieb, kann jedoch auch für die Beschichtung mit Handsprühpistolen verwendet werden.

Sprühbeschichtungsvorrichtungen mit Kabinen sind aus folgenden Schriften bekannt:

| | |
|---|---|
| DE 37 04 551 | DE 36 02 172 |
| DE 28 09 020 | DE 43 39 492 |
| DE 43 00 837 | DE 41 34 701 |
| DE 41 31 287 | DE 41 26 890 |
| DE 40 12 676 | DE 35 38 800 |
| DE 34 06 464 | DE 24 49 065 |
| DE 22 56 865 | DE 92 03 366 |
| DE 73 18 275 | DE 37 14 052 |
| DD 2 18 990 | DE 38 14 002 |
| EP 6 02 409 | CH 5 77 346 |
| CH 5 60 558 | |

### Literatur:

JP 54-65739 A. In: Patents Abstracts of Japan, C-53, July 25, 1979, Vol. 3, No. 87
Das in den bekannten Kabinen versprühte, nicht am Objekt haftende Pulver fällt zum größten Teil auf den Kabinenboden, während ein kleiner Anteil an den Kabinenwänden haftet. Dieses am Objekt nicht haftende Überschußpulver kann vom Kabinenboden abgesaugt und mittels Pulverabscheidung, insbesondere Zyklon und/oder Filterelemente, aus dem Saugluftstrom getrennt, dann gesiebt und anschließend mit frischem Pulver vermischt werden, bevor es der Sprühvorrichtung zugeführt und erneut versprüht wird. Beim Farbwechsel (Wechsel von einer Pulversorte auf eine andere Pulversorte) müssen nicht nur sämtliche Kabinen-Innenflächen, sondern auch die Zyklone und Filtereinrichtungen sowie die Pulverleitungen äußerst genau gereinigt werden, damit keine Pulverpartikel des zuerst verwendeten Pulvers mit dem danach verwendeten Pulver vermischt werden. Bereits einzelne Pulverpartikel können zu Beschichtungsfehlern auf dem Objekt führen, welche die Beschichtung unbrauchbar machen. Man denke nur an den Wechsel von einem schwarzen oder roten Pulver auf weißes Pulver oder umgekehrt. Die zu beschichtenden Objekte können Haushaltsgeräte oder Autokarrosierien sein, deren Käufer keine Farbfehler dulden. Die Rückgewinnung des Überschußpulvers reduziert zwar die Herstellkosten, geblieben ist jedoch weiterhin das Problem, daß bei einem Farbwechsel sehr viel Zeit und/oder zusätzliche Anlagenteile (zum Beispiel austauschbare Pulverabscheider, Siebvorrichtungen, Fluidleitungen) benötigt werden, um lange Stillstandszeiten der Anlage zu vermeiden. Hieraus ist ersichtlich, daß bei Vielfarbenbeschichtungen und dann, wenn Objekte mit verschiedenen Farben beschichtet werden sollen, der genannte Sprühbeschichtungsbetrieb mit Rückgewinnung des Überschußpulvers unrentabel wird und auf Verlust gefahren werden muß. "Auf Verlust fahren" bedeutet, daß das Überschußpulver nicht aufbereitet und wiederverwendet, sondern als Abfall weggeworfen wird. Das Reinigen ist umso schwerer und zeitaufwendiger, je mehr das Pulver sich in der Kabine und den anderen Teilen ablagern kann. Aus diesem Grunde werden anstelle von Metallkabinen Kunststoffkabinen verwendet, da an ihnen die Pulverpartikel weniger stark und in geringerer Menge haften als in Metallkabinen. Die Pulverpartikel bestehen meistens aus Kunststoff, können jedoch auch aus Keramik oder einem anderen Material bestehen.

Durch die Erfindung soll die Aufgabe gelöst werden, den für einen Farbwechsel oder Pulverwechsel erforderlichen Zeitaufwand und/oder Aufwand an zusätzlichen Anlagenteilen weiter zu reduzieren, ohne auf eine gute Beschichtungsqualität verzichten zu müssen. Durch die Erfindung soll erreicht werden, daß eine Sprühbeschichtungsvorrichtung sowohl von den Herstellungskosten als auch für den Beschichtungsbetrieb auch dann rentabel ist, wenn sie wechselweise für lange Betriebsperioden mit gleichbleibender Pulversorte und dann wieder mit häufig wechselnden Pulversorten verwendet wird.

Diese Aufgabe wird gemäß der Erfindung durch die Merkmale von Anspruch 1 gelöst.

Vorteilhafte Ausführungen der Erfindung sind in den Unteransprüchen enthalten.

Die Erfindung wird im folgenden in bezug auf die Zeichnungen anhand von mehreren Ausführungsformen als Beispiele beschrieben. In den Zeichnungen zeigen
- Fig. 1: schematisch und mit Bezug auf eine Kabine im axialen Vertikalschnitt eine Sprühbeschichtungsvorrichtung für Handbetrieb und Automatikbetrieb zum Sprühbeschichten von Objekten mit Beschichtungspulver,
- Fig. 2: eine Draufsicht auf wesentliche Teile der Vorrichtung von Fig. 1,
- Fig. 3: eine mit Bezug auf Fig. 1 vergrößerte Querschnittsdarstellung einer Wand der Kabine von Fig. 1,
- Fig. 4: schematisch im axialen Vertikalschnitt eine weitere Ausführungsform einer Kabine der Sprühbeschichtungsvorrichtung von Fig. 1,
- Fig. 5: eine Draufsicht auf die Kabine von Fig. 4,
- Fig. 6: eine Seitenansicht der Kabine von Fig. 5 von links längs eines Pfeiles IX gesehen,
- Fig. 7: schematisch eine vertikale Schnittansicht durch verschiedene Ausführungsformen von Reinigungsmitteln zum Reinigen der Kabinenwand-Innenflächen.
- Fig. 8: einen Vertikalschnitt und
- Fig. 9: eine Draufsicht auf eine weitere Ausführungsform nach der Erfindung.

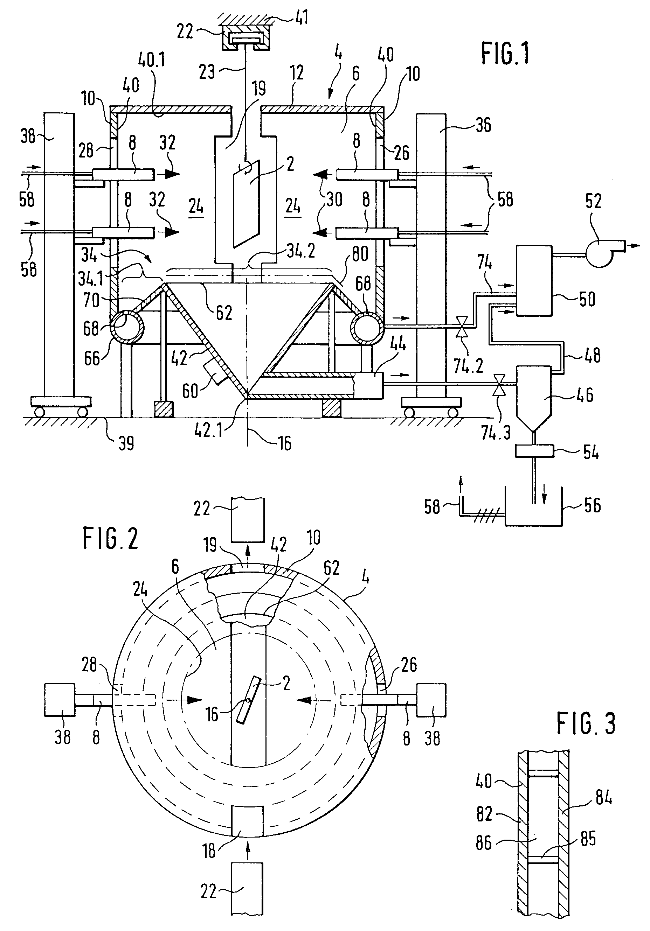

Die in den Fig. 1 bis 3 dargestellte Sprühbeschichtungsvorrichtung für Handbetrieb und Automatikbetrieb zum Sprühbeschichten von Objekten 2 enthält eine Kabine 4, welche einen Beschichtungsraum 6 bildet, in welchem die Objekte 2 mittels einer oder mehrerer Sprühvorrichtungen 8 beschichtet werden. Die Kabinenwand 10 und die Kabinendecke 12 haben, im Horizontalschnitt gesehen, eine kreisrunde Form oder zumindest eine an einen Kreis angenäherte allseitig runde Form, in deren radialen Mitte die theoretische vertikale Mittelachse 16 der Kabine 4 liegt. Gemäß einer nicht dargestellten abgewandelten Ausführungsform hat die Kabine 4 im Horizontalschnitt gesehen anstatt einer kreisrunden Form eine einem Kreis angenäherte ovale Form. In der Kabinenwand 10 befinden sich aufeinander diametral gegenüberliegenden Seiten je eine Durchgangsöffnung 18 und 19 je in Form eines vertikalen Schlitzes, welcher die Kabinenwand 10 und die Kabinendecke 12 in zwei gleich große Segmente teilt. Diese Teilung der Kabine 4 in gleiche Segmente, welche sich jeweils über die gesamte Höhe des Beschichtungsraumes 6 erstrecken, vereinfacht die Herstellung und den Transport der Kabine 4. An den Durchgangsöffnungen 18 und 19 können Türen sein und, in abgewandelter Ausführungsform, können die Durchgangsöffnungen 18 und 19 in solchen Türen gebildet sein. Die zu beschichtenden Objekte 2 hängen an Haken 23 einer Transportvorrichtung 22, welche die zu beschichtenden Objekte durch die eine Durchgangsöffnung 18 in den radialen Zentrumsbereich 24 des Beschichtungsraumes 6, in welchem die Objekte 2 beschichtet werden, und dann durch die andere Durchgangsöffnung 19 wieder aus der Kabine 4 heraustransportiert. Der Zentrumsbereich 24 ist, im Horizontalschnitt gesehen, der Bereich des Beschichtungsraumes 6, der radial innerhalb des halben Radius des Beschichtungsraumes 6 liegt.

Um die Mittelachse 16 versetzt, vorzugsweise um 90° versetzt, zu den Durchgangsöffnungen 18 und 19 sind zwei einander diametral gegenüberliegende Sprühöffnungen 26 und 28 in Form von vertikalen, allseitig begrenzten Schlitzen in der Kabinenwand 10 gebildet, durch welche sich die Sprühvorrichtungen 8 hindurch erstrecken. Die Sprührichtungen 30 der Sprühvorrichtungen 8 der einen Sprühöffnung 26 sind vorzugsweise fluchtend und entgegengesetzt zu den Sprührichtungen 32 der Sprühvorrichtungen 8 der anderen Sprühöffnung 28 angeordnet, damit die am Objekt 2 vorbeiströmenden Luftstrahlen der Sprühstrahlen miteinander kollidieren und Überschußpulver konzentriert im Zentrumsbereich 24 durch Schwerkraft auf den Kabinenboden 34 absinkt. Die Sprühvorrichtungen 8 werden an jeder Sprühöffnung 26 und 28 je von einem außerhalb der Kabine 4 auf einem Gebäudeboden 39 stehenden Hubständer 36 und 38 getragen, welche automatisch gesteuert die Sprühvorrichtungen 8 auf und ab bewegen. Jeder Hubständer 36 und 38 kann eine oder mehrere Sprühvorrichtungen 8 tragen, die übereinander oder nebeneinander angeordnet sein können. Gemäß einer anderen Ausführungform können die Sprühvorrichtungen 8 bezüglich ihrer Sprührichtungen 30 und 32 aneinander vorbeigerichtet sein. Wenn die Sprührichtungen 30 und 32 im gleichen Drehsinn zur radialen Mittelachse 16 versetzt zueinander angeordnet sind, können ihre Pulver-Luft-Ströme in der runden Kabine 4 eine Wirbelströmung erzeugen. Anstelle der automatisch gesteuerten Sprühvorrichtungen 8 können handbetätigte Sprühvorrichtungen oder Sprühpistolen verwendet werden. Alle Sprühvorrichtungen 8 werden vorzugsweise synchron miteinander bewegt, um die Objekte 2 in ihrer gesamten Höhe zu beschichten.

Der Kabinenboden 34 ist derart ausgebildet, daß von den Wandinnenflächen 40 der Kabinenwand 10 abfallendes Überschußpulver getrennt von dem ohne vorherige Berührung dieser Wandinnenflächen 40 auf den Kabinenboden 34 fallenden Überschußpulver aus der Kabine 4 entfernt werden kann. Für diesen Zweck ist der Kabinenboden 34 auf äußere Sammelmittel 34.1 und innere Sammelmittel 34.2 aufgeteilt. Die äußeren Sammelmittel 34.1 erstrecken sich um den gesamten Innenumfang der Wandinnenflächen 40 in Form eines verhältnismäßig schmalen Streifens. Die inneren Sammelmittel 34.2 werden von den äußeren Sammelmitteln 34.1 umgeben und grenzen unmittelbar an diese an und bedecken den gesamten innerhalb der äußeren Sammelmittel gelegenen Bereich des Kabinenbodens 34. Die beiden Sammelmittel 34.1 und 34.2 sind derart ausgebildet, daß das auf sie fallende Pulver nicht zu dem betreffenden anderen Sammelmittel gelangen und sich mit dem dortigen Pulver vermischen kann. Das auf die inneren Sammelmittel 34.2 fallende Überschußpulver darf nicht mit Überschußpulver von den äußeren Sammelmitteln 34.1 vermischt oder "verunreinigt" werden. Demgegenüber ist es ohne Nachteil (außer daß es als Verlust-Pulver behandelt wird), wenn ein kleiner Anteil des Überschußpulvers der inneren Sammelmittel 34.2 zu den äußeren Sammelmitteln 34.1 gelangt. Bei der in Fig. 1 und 2 dargestellten Ausführungsform weisen die inneren Sammelmittel 34.2 einen Sammeltrichter 42 auf, an dessen nach unten zeigenden Spitze eine Pulverabsaugleitung 44 eines Zyklons 46 angeschlossen ist. Eine Abluftsaugleitung 48 des Zyklons 46 ist an die Eingangsseite einer Filtereinrichtung 50 angeschlossen, welche Restpulver aus der Abluft des Zyklons 46 filtert und an deren Ausgangsseite ein Sauggebläse 52 angeschlossen ist. Das vom Zyklon 46 aus dem Pulver-Luft-Strom der Pulverabsaugleitung 44 ausgeschiedene Pulver gelangt vom unteren Zyklonende zu einer Siebmaschine 54 und fällt dann in einen Pulverbehälter 56. Der Pulverbehälter 56 kann ein Gebinde sein, mit welchem Frischpulver vom Pulverhersteller dem Pulveranwender geliefert wird. Das frische Pulver und das durch den Zyklon 46 und die Siebmaschine 54 zurückgewonnene Überschußpulver werden aus dem Pulverbehälter 56 über Pulverleitungen 58 den Sprühvorrichtungen 8 zugeführt. Der Sammeltrichter 42 kann mittels einer Vibrationsvorrichtung 60 vibriert werden, damit in ihn fallendes Pulver leichter zur Trichterspitze abrutscht. Der obere, im Durchmesser größte Trichterrand 62 erstreckt sich seitlich über den über ihm gelegenden Zentrumsbereich 24 hinaus und grenzt direkt an die äußeren Sammelmittel 34.1 an.

Die äußeren Sammelmittel 34.1 haben eine Saugluft-Sammelleitung 66, welche am unteren Ende der Kabinenwand 10 angeordnet ist und sich über die gesamte Umfangslänge der Kabinenwand 10 erstreckt. Die Saugluft-Sammelleitung 66 hat auf ihrer Oberseite auf ihre gesamte Länge verteilt mindestens eine (Schlitz) oder eine Vielzahl von Saugöffnungen 68, welche sich zwischen der Wandinnenfläche 40 und einer Übergangswand 70 befinden und direkt an diese beiden angrenzen. Die Oberseite der Saugluft-Sammelleitung 66 und damit auch ihre Saugöffnungen 68 befinden sich auf einer niedrigeren Höhe als der obere Trichterrand 62 der inneren Sammelmittel 34.2. Die Übergangswand 70 hat kegelförmig einen nach unten größer werdenden Außendurchmesser und überbrückt den kleinen Höhenunterschied und den kleinen radialen Breitenunterschied des Kabinenbodens 34 zwischen den Saugöffnungen 68 und dem Trichterrand 62. Von der Wandinnenfläche 40 abfallende Pulverpartikel gelangen deshalb entweder direkt in die Saugöffnungen 68 oder zuerst auf die Übergangswand 70 und rutschen dann von ihr in die Saugöffnungen 68. Wenn die Übergangswand 70 aus flexiblem Material, beispielsweise Gummi, besteht, dann wird verhindert, daß sich die Schwingungen des Vibrationserzeugers 60 vom Trichter 42 auf die Kabinenwand 10 übertragen. Falls eine solche Schwingungsübertragung gewünscht wird oder kein Vibrationserzeuger 60 verwendet wird, kann die Übergangswand 70 aus steifem Material, vorzugsweise Kunststoff bestehen. Gemäß anderen Ausführungsformen kann die Übergangswand 70 eine andere Form, z.B. Zylinderform, haben oder völlig weggelassen werden und der Trichterrand 62 des Trichters 42 direkt an die Saugluft-Sammelleitung 66 angrenzen.

Die Saugluft-Sammelleitung 66 ist mittels einer zweiten Pulverabsaugleitung 74 an die Eingangsseite oder stromaufwärtige Seite der Filtereinrichtung 50 angeschlossen, um mittels eines zweiten Saugluftstromes Überschußpulver ausscheiden zu können. Das von der Filtereinrichtung 50 aus dem zweiten Saugluftstrom der Saugluftleitung 66 gefilterte Überschußpulver und das aus der Abluftsaugleitung 48 des Zyklons 46 in der Filtereinrichtung 50 abgeschiedene Überschußpulver wird weggeworfen und ist damit Verlust. Das Sauggebläse 52 kann somit einen ersten Saugluftstrom im Sammeltrichter 42 und einen zweiten Saugluftstrom in den Saugöffnungen 68 der Saugluft-Sammelleitung 66 erzeugen. In den beiden, oder mindestens einer der beiden, Pulverabsaugleitungen 44 und/oder 74 kann sich zu ihrem wahlweisen Verschließen ein Absperrelement 74.2 und/oder 74.3 befinden. Gemäß einer anderen Ausführungsform können zur Erzeugung von jedem Saugluftstrom getrennte Sauggebläse 52 verwendet werden. Statt Saugluftströme könnten Druckluftströme verwendet werden, was aber mehrere Nachteile hat.

Der Grundgedanke dieser Ausführungsform besteht darin, daß versprühtes, am Objekt 2 nicht haftendes Pulver, im folgenden Überschußpulver genannt, a) aufgeteilt wird auf erstes Überschußpulver, welches nicht auf die Innenflächen 40 der Kabinenwand 10 gelangte, und auf zweites Überschußpulver, welches auf diese Innenflächen 40 gelangte, insbesondere durch die Sprühvorrichtungen 8 hingesprüht wurde, und dann von selbst abfällt oder durch einen Reinigungsvorgang abfällt, und b) das erste Überschußpulver und das zweite Überschußpulver getrennt voneinander aus der Kabine 4 entfernt werden. Hierfür kann die Kabinenwand 10, im horizontalen Querschnitt gesehen, die in den Zeichnungen dargestellte kreisrunde Form, eine ovale oder beliebige eckige Form haben. In das erste Überschußpulver darf das zweite Überschußpulver nicht gelangen. Dagegen ist es nicht schädlich, wenn ein kleiner Anteil des ersten Überschußpulvers in das zweite Überschußpulver gelangt. Dieser Grundgedanke ermöglicht verschiedene Verfahren:
- Schritt 1: Während einer Sprühbeschichtungsphase, wenn Beschichtungspulver auf die Objekte 2 gesprüht wird, wird das erste Überschußpulver (ohne Wandkontakt) der inneren Sammelmittel 34.2 kontinuierlich oder diskontinuierlich aus der Kabine 4 herausgefördert, vorzugsweise pneumatisch abgesaugt, und zur Wiederverwendung zurückgewonnen.
- Schritt 1.1.1: Während der Sprühbeschichtungsphase nach Schritt 1 wird das zweite Überschußpulver (mit Wandkontakt) in der Kabine 4 auf den äußeren Sammelmitteln 34.1 gelassen, oder gemäß
- Schritt 1.1.2: kontinuierlich oder diskontinuierlich aus der Kabine 4 herausgefördert, vorzugsweise pneumatisch abgesaugt.
- Schritt 2: Während der Reinigungsphase (z.B. in einer Sprühbeschichtungspause beim Pulverwechsel oder Farbwechsel) wird das zweite Überschußpulver (mit Wandkontakt) mittels der äußeren Sammelmittel 34.1 aus der Kabine 4 entfernt, wobei
- Schritt 2.1.1: gleichzeitig erstes Überschußpulver (ohne Wandkontakt) durch die inneren Sammelmittel 34.2 aus der Kabine 4 entfernt werden kann oder gemäß
- Schritt 2.1.2: kein erstes Überschußpulver (ohne Wandkontakt) durch die inneren Sammelmittel 34.2 aus der Kabine 4 abgeführt wird, und beispielsweise die inneren Sammelmittel 34.2 zugedeckt werden mit einer Abdeckung 80.
- Schritt 3: anstelle von Schritt 1, Schritt 1.1.1 und Schritt 1.1.2:
Während einer Sprühbeschichtungsphase, wenn Beschichtungspulver auf die Objekte 2 gesprüht wird, wird entweder gemäß
- Schritt 3.1.1: kein Überschußpulver (weder das erste noch das zweite) aus der Kabine herausgefördert, und es werden die inneren 34.2 und äußeren 34.1 Sammelmittel mit einer Abdeckung 80 oder dgl. zugedeckt, damit sie nicht mit Überschußpulver "verschmutzt" werden, oder es wird gemäß
- Schritt 3.1.2: nur das zweite Überschußpulver der äusseren Sammelmittel 34.1 aus der Kabine 4 herausgefördert, aber kein erstes Überschußpulver der inneren Sammelmittel 34.2, indem nur die inneren Sammelmittel 34.2 durch eine Abdeckung 80 zugedeckt werden.
- Schritt 4: erfolgt anschließend an die Schritte 3 und 3.1.1 oder 3.1.2 gleich wie die Schritte 2 und 2.1.1 oder 2.1.2.

Die Sammelmittel 34.1 und/oder 34.2 werden nur dann durch die Absaugleitungen 44 und/oder 74 an einen Saugluftstrom angeschlossen, wenn Überschußpulver durch sie abgesaugt werden soll, jedoch nicht, wenn durch die betreffenden Sammelmittel 34.1 und/oder 2 kein Pulver abgesaugt werden soll.

Das Verfahren nach Schritt 1, 1.1.1, 1.1.2 wird vorzugsweise dann angewendet, wenn längere Zeit das gleiche Beschichtungspulver verwendet wird. Das Verfahren nach Schritt 3, 3.1.1 und 3.1.2 wird vorzugsweise dann angewendet, wenn häufige Farbwechsel oder Pulverwechsel erforderlich sind oder längere Sprühbeschichtungsphasen unterbrochen werden, um kurzzeitig ein anderes Beschichtungspulver zu verwenden. Damit können mit einer einzigen Anlage verschiedene Anwendungszwecke erfüllt werden.

Wenn ein Pulverwechsel durchgeführt werden soll zwischen Sprühbeschichtungsphasen, während welchen das erste Überschußpulver der inneren Sammelmittel 34.2 zurückgewonnen wird, dann braucht nur die Pulverrückgewinnungsvorrichtung (Sammeltrichter 42, seine Pulverabsaugleitung 44, der Zyklon 46 und die Siebmaschine 54) sowie die Deckeninnenfläche 40.1 der Kabine 4 gründlich gereinigt werden, und der Behälter 56 ausgetauscht zu werden. Demgegenüber brauchen die Wandinnenflächen 40 der Kabine 4 nur grob gereinigt zu werden, da restliche Pulverpartikel, wenn sie bei Benutzung eines anderen Pulvers abfallen, nicht in den Sammeltrichter 42 gelangen können, und damit auch nicht in den Pulverbehälter 56. Dadurch wird viel Zeit und Reinigungsaufwand eingespart. Wenn beim Wechsel auf eine andere Pulversorte die andere Pulversorte nur kurzzeitig verwendet werden soll, dann braucht für den Pulverwechsel nicht einmal der Trichter 42 und seine Pulverabsaugleitung 44 oder der Zyklon 46 und die Siebmaschine 54 gereinigt zu werden, sondern es genügt, während der Beschichtung mit dem anderen Pulver den Sammeltrichter 42 durch eine Abdeckung 80 (strichpunktiert schematisch dargestellt) solange abzudecken, wie mit dem anderen Pulver Objekte 2 beschichtet werden. Die Innenflächen 40 der Kabine 4 brauchen nur grob gereinigt zu werden, damit kein früheres Pulver von ihnen abfällt, während mit dem anderen Pulver beschichtet wird.

Die im horziontalen Querschnitt gesehen kreisrunde Kabine 4 ist symmetrisch aufgebaut. Ihre Wandinnenflächen 40 sind in gleicher Weise kreisrund und haben ihr radiales Zentrum in der Mittelachse 16. Die untere Spitze 42.1 des Sammeltrichters 42 liegt in dieser Mittelachse 16, und die Saugluft-Sammelleitung 66 ist konzentrisch zur Mittelachse 16 angeordnet. Der Sammeltrichter 42 hat eine geradlinig kegelförmig nach unten enger werdende Form. Die Kabinenwand 10, die Kabinendecke 12, der Trichter 42, die Saugluft-Sammelleitung 66 und die Übergangswand 70 bestehen vorzugsweise alle aus elektrisch nicht leitendem Material, vorzugsweise Kunststoff, da dieses Material die Pulverpartikel weniger an sich haften läßt als beispielsweise Metall. Ebenso können die von Pulver durchströmten Leitungen 44, 48, 74 aus elektrisch nicht leitendem Material, beispielsweise Kunststoff, sein.

Die Kabine 4 ist durch die schlitzartigen Durchgangsöffnungen 18 und 19 in zwei gleiche schalenartige Kabinenhälften geteilt. Sie kann auch einteilig sein oder in mehrere gleich große Segmente aufgeteilt sein. Gemäß einer bevorzugten Ausführungsform besteht die Kabinenwand 10, vorzugsweise auch die Kabinendecke 12 aus einer Doppelwandkonstruktion entsprechend Fig. 3, die eine Innenwand 82 und eine Außenwand 84 aufweist, welche durch Stege 85 miteinander verbunden sind und einen Hohlraum 86 begrenzen, der mit Luft gefüllt ist, vorzugsweise mit Atmosphärendruck. Der Zwischenraum 86 kann zur Außenluft hin offen und zum Beschichtungsraum 6 hin geschlossen sein. Die Innenwand 82 und die Außenwand 84 bestehen je aus Kunststoff.

Gemäß einer abgewandelten, nicht dargestellten Ausführungsform sind die Sprühvorrichtungen 8 nicht durch Sprühöffnungen in der Kabinenwand, sondern durch Sprühöffnungen in der Kabinendecke 12 in den Beschichtungsraum 6 der Kabine 4 eingeführt.

In die Kabine 4 kann eine Reinigungsvorrichtung in Form eines rotierbaren Rahmens eingesetzt werden, welcher um die vertikale Mittelachse 16 rotiert und dabei die Innenflächen der Kabine 4 automatisch reinigt.

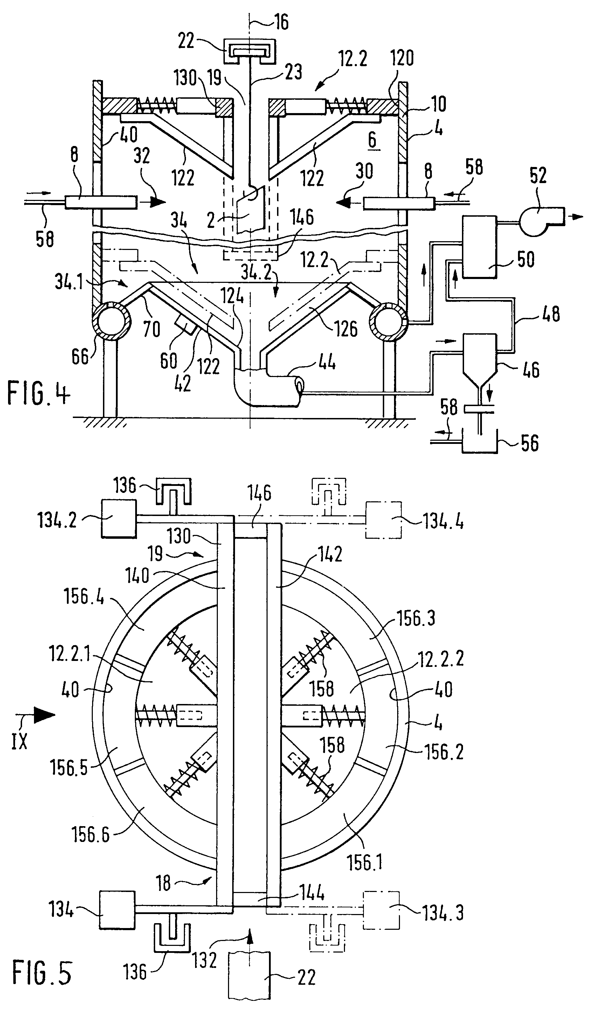

Die Sprühbeschichtungsvorrichtung nach den Fig. 4, 5 und 6 ist identisch mit der Sprühbeschichtungsvorrichtung nach den Fig. 1, 2 und 3 mit Ausnahme des dort nur schematisch dargestellten Kabinendaches, welches hier detaillierter dargestellt und mit 12.2 bezeichnet ist. Das Kabinendach 12.2 ist entlang der vertikalen Kabinenwandinnenflächen 40 in die Kabine bis zum Kabinenboden 34 absenkbar. Der Außenumfang 120 des Kabinendaches 12.2 liegt direkt neben den Kabineninnenwandflächen 40 und weist Reinigungsmittel zum Reinigen dieser Kabinenwandinnenflächen 40 während der Abwärtsbewegung des Kabinendaches 12.2 von seiner obersten Ausgangsposition (in Fig. 4 in ausgezogenen Linien dargestellt) bis zu seiner untersten Position (in Fig. 4 in strichpunktierten Linien dargestellt). Das Kabinendach 12.2 ist somit eine Art "Lift", welche abwärts und aufwärts fahrbar ist. Bei der Abwärtsfahrt wird von seinen Reinigungsmitteln an seinem Außenumfang 120 der gesamte Umfang und die gesamte Höhe der Kabineninnenwandflächen 40 automatisch gereinigt. Eine weitere Besonderheit des Kabinendaches 12.2 besteht darin, daß seine Unterseite der Form des Kabinenbodens 34, mindestens jedoch der Form der inneren Sammelmittel 34.2 angepaßt ist, indem die in den Beschichtungsraum 6 nach unten zeigende Dachoberfläche 122 in gleicher Weise kegelstumpfförmig ausgebildet ist wie der Sammeltrichter 42 und dadurch in diesen Sammeltrichter 42 formmäßig und größenmäßig hineinpaßt. Während des Reinigungsvorganges für einen Pulverwechsel wird das Kabinendach 12.2 vorzugsweise nur soweit abgesenkt, daß zwischen der unteren Kabinendachoberfläche 122 und der nach oben zeigenden inneren Trichteroberfläche 124 ein enger Spalt 126 verbleibt. Dieser Spalt 126, im folgenden Pulverabsaugspalt genannt, ist so eng, daß er als Strömungsdrossel wirkt und dadurch eine Beschleunigung der Luft zur Folge hat, welche vom Saugluftgebläse 52 unterhalb des abgesenkten Kabinendaches 12.2 durch den Sammeltrichter 42 aus der Kabine 4 abgesaugt wird. Die beschleunigte Luft reist im Pulverabsaugspalt 126 an der unteren Kabinenoberfläche 122 des abgesenkten Kabinendaches 12.2 und an der nach oben zeigenden inneren Trichteroberfläche 124 haftendes Pulver mit und reinigt dadurch gründlich diese Oberflächen 122 und 124.

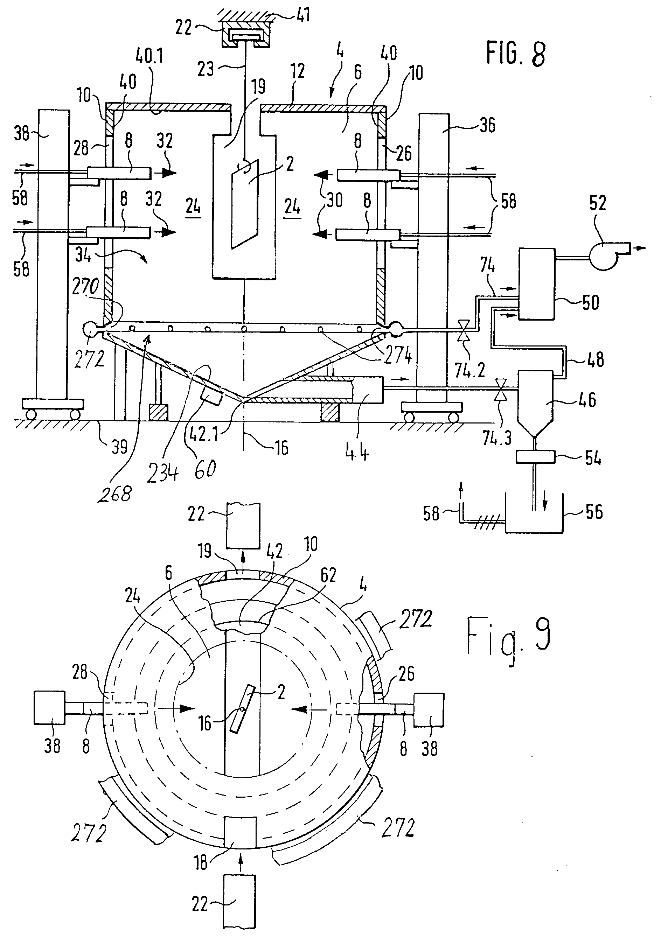

Das Kabinendach 12.2 kann von einer oder mehreren Hubvorrichtungen getragen und abwärts und aufwärts bewegt werden. Gemäß der Ausführungsform nach den Fig. 4 bis 6 ist das Kabinendach 12.2 mit einer Tragvorrichtung 130 versehen, welche sich durch die Durchgangsöffnungen 18 und 19 aus der Kabine 4 hinauserstreckt und innerhalb dieser Durchgangsöffnungen 18 und 19 zusammen mit dem Kabinendach 12.2 vertikal verfahrbar ist. Die Tragvorrichtung 130 wird von mindestens einer außerhalb der Kabine neben dem Bewegungsweg 132 der Transportvorrichtung 22 angeordneten Hubvorrichtung 134 getragen und in der genannten Weise vertikal bewegt. Die Tragvorrichtung 130 kann in vertikalen Führungen 136 vertikal geführt werden, damit die Hubvorrichtung 134 nur die Hubkräfte erzeugen muß, jedoch nicht mit Querkräften des Kabinendaches 12.2 und seiner Tragvorrichtung 130 quer zur Mittelachse 16 der Kabine 4 belastet wird. Da sich die Hubvorrichtung 134 neben dem Transportweg 132 der Transportvorrichtung 22 und der Objekte 2 befinden muß, ist sie zwangsweise neben den Durchgangsöffnungen 18 oder 19 angeordnet. Bei der dargestellten bevorzugten Ausführungsform ist neben jeder dieser beiden Durchgangsöffnungen 18 und 19 je eine solche Hubvorrichtung 134 angeordnet, wobei die zweite Hubvorrichtung in Fig. 8 mit 134.2 bezeichnet ist. Wie schematisch dargestellt, könnten zum Ausgleich von Querkräften vier Hubvorrichtungen 134, 134.2, 134.3 und 134.4 außerhalb der Kabine 4 angeordnet werden.

Bei der Ausführungsform nach den Fig. 4, 5 und 6 ist das Kabinendach 12.2 auf zwei spiegelbildlich gleiche Hälften aufgeteilt, welche symmetrisch zu den Durchgangsöffnungen 18 und 19 neben dem Bewegungsweg 132 der Transportvorrichtung 22 mit den Objekten 2 angeordnet und durch die Tragvorrichtung 130 miteinander verbunden sind. Die Tragvorrichtung 130 hat einen die eine Kabinendachhälfte 12.2.1 tragenden, sich in Richtung des Bewegungsweges 132 der Objekte 2 erstreckenden Längsträger 140 und einen die andere Kabinendachhälfte 12.2.2 tragenden, parallel zu ihm angeordneten zweiten Längsträger 142. Die beiden Längsträger 140 und 142 sind außerhalb der Kabine 4 an beiden Ende je durch einen Querträger 144 und 146 miteinander verbunden. Diese beiden Querträger 144 und 146 sind zur Vermeidung einer Beschichtung mit Pulver außerhalb der Kabine 4 angeordnet und sie sind so tief angeordnet, daß die Haken 23 mit den Objekten 2 über sie hinweglaufen können. Gemäß einer nicht dargestellten Ausführungform sind die beiden Querträger 144 und 146 weggelassen und jeder Längsträger 140 und 142 wird von einer eigenen Hubvorrichtung 134 (134.2, 134.3, 134.4) getragen. Dadurch können die Längsträger 140 und 142 zusammen mit ihrer Kabinendachhälfte 12.2.1 und 12.2.2 getrennt oder synchron zusammen abgesenkt und angehoben werden.

Gemäß einer weiteren, nicht dargestellten Ausführungsform kann die untere Kabinendachoberfläche 122 an die ihr gegenüberliegende Form der äußeren Sammelmittel 34.1, also insbesondere an die Form der Saugluft-Sammelleitung 66 und der Übergangswand 70 derart angepaßt sein, daß auch zwischen ihnen ein enger Pulverabsaugspalt entsteht, durch dessen Luftbeschleunigung an ihren Oberflächen haftendes Pulver abgerissen und vom Saugluftstrom abgeführt wird.

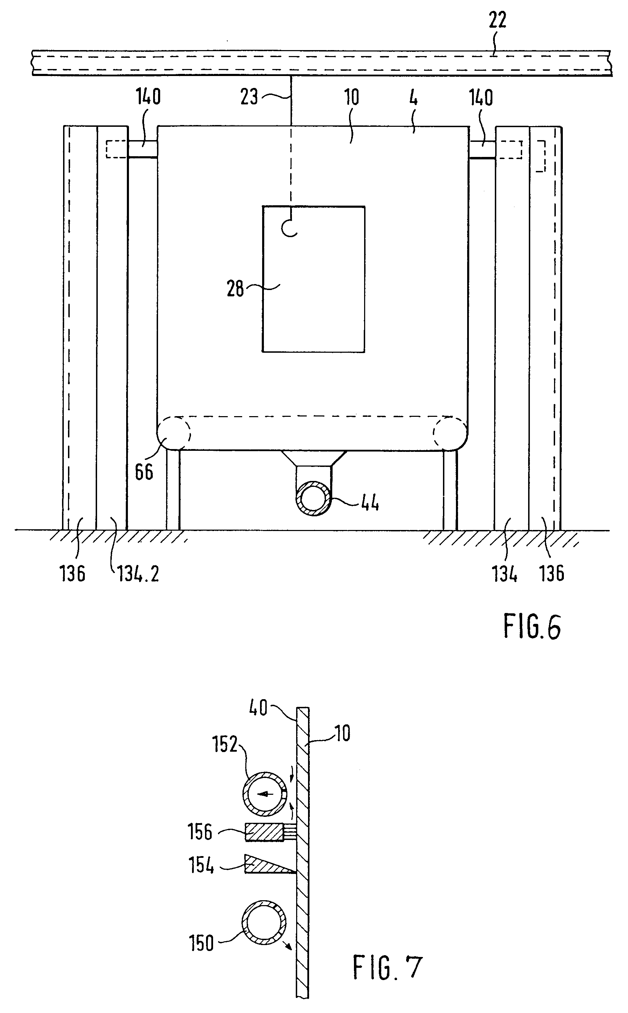

Die um den gesamten Außenumfang 120 des Kabinendaches 12.2 vorgesehenden Reinigungsmittel zur Reinigung der Kabinenwandinnenflächen 40 können gemäß Fig. 7 beispielsweise eines oder mehrere der folgenden Mittel sein, welche jeweils um den gesamten inneren Kabinenwandumfang herum angeordnet sind und welche, bei Verwendung von mehreren solchen Reinigungsmitteln, übereinander angeordnet sein können: Druckluftdüsen 150 zum Blasen von Druckluft, gegebenenfalls ionisierte Luft, auf die Kabinenwandinnenflächen 40, Saugluftdüsen 152 zum Absaugen von Pulverpartikeln von den Kabinenwandinnenflächen 40, Schabelemente 154 oder Wischelemente 156, z.B. Bürstenelemente oder ein Schwamm sein, wie dies in Fig. 7 schematisch dargestellt ist. Die Wischelemente 156 können anstelle von Borsten einen Stoffbezug aus Samt oder einem anderen Material zum Abwischen von Pulver von der Kabineninnenwandfläche 40 haben.

In Fig. 5 sind als Beispiel solcher Reinigungsmittel Abwischelemente 156 in Form von Segmenten 156.1, 156.2, 156.3, 156.4, 156.5 und 156.6 schematisch dargestellt, welche in einer Horizontalebene an die Kabinenwandinnenflächen 40 ringförmig aneinander angrenzend angeordnet sind und mittels Federn 158 elastisch gegen die Kabinenwandinnenflächen 40 gedrückt werden. Sie werden von den Längsträgern 140 und 142 getragen. Die Segmente können die Kabineninnenwandflächen abblasen, absaugen und/oder trocken oder feucht abwischen oder abbürsten. Statt Federn 158 können andere elastische Anpreßelemente verwendet werden, z.B. Druckluftzylinder.

Gemäß einer nicht dargestellten Ausführungsform ist nur der mit den Reinigungsmitteln versehene Kabinendachaußenumfang 120 absenkbar, jedoch nicht der radial innerhalb diese Umfanges 120 gelegende Kabinendachteil. In diesem Falle können die Kabinenwandinnenflächen 40 wie vorstehend beschrieben gereinigt werden. Lediglich am Kabinenboden wird dann kein Pulverabsaugspalt 126 gebildet, sondern die Saugluftströmung muß ohne eine solche Spaltbildung ausreichen, alle Pulverpartikel von den Elementen des Kabinenbodens 34 abzusaugen.

Im folgenden wird die Ausführungsform nach der Erfindung gemäß den Figuren 8 und 9 beschrieben, soweit sie von der Ausführungsform der Figuren 1 und 2 abweicht. Bezüglich der übereinstimmenden Merkmale gilt die Beschreibung der Figuren 1 und 2.

Der Kabinenboden 234 hat die Form eines nach unten zeigenden Trichters und erstreckt sich, schräg nach unten zur Kegelspitze geneigt, von der Kabinenwand 10 bis zu einem Auslaß in der Trichterspitze. An diesem Anschluß ist die Pulverabsaugleitung 44 des Zyklons 46 angeschlossen. Der Kabinenboden 234 dient als inneres Sammelmittel (ähnlich der genannten inneren Sammelmittel 34.2 von Fig. 1) zum Entfernen von Überschußpulver über dem gesamten inneren horizontalen Querschnitt der Kabine 4.

In der Kabinenwand 10 ist an ihrem unteren Ende, an welches der Kabinenboden 234 angrenzt, ein zweiter Pulverauslaß 268 gebildet, welcher sich horizontal um die gesamte Kabine 4 erstreckt und an die zweite Pulverabsaugleitung 74 der Filtereinrichtung 50 angeschlossen ist. Der zweite Pulverauslaß 268 dient als äußeres Sammelmittel (ähnlich dem äußeren Sammelmittel 31.1 von Fig. 1) zum Absaugen von Überschußpulver, welches von der Wandinnenfläche 40 der Kabinenwand 10 abfällt, während des Sprühbeschichtungsbetriebes und/oder während des Reinigens der Kabine 4. Der zweite Pulverauslaß 268 besteht bei der in Fig. 8 und 9 dargestellten bevorzugten Ausführungsform in Saug-Strömungsrichtung nacheinander aus einem Ring-Schlitz 270 in der Kabinenwand 10 um die ganze Kabine 4 herum und einem außerhalb der Kabinenwand 10 angeordneten Verteilerrohr 272, welches über eine große Vielzahl von Bohrungen 274 mit dem Ring-Schlitz 270 in Strömungsverbindung ist und an die zweite Pulverabsaugleitung 74 angeschlossen ist.

In der Pulverabsaugleitung 44 des Zyklons 46 und in der Pulverabsaugleitung 47 der Filtereinrichtung 50 befindet sich je ein Verschlußelement 74.3 bzw. 74.2, beispielsweise ein Auf-Zu-Ventil, eine einstellbare Drosselklappe, ein Hahn oder dergleichen. Damit können diese beiden Pulverleitungen 44 und 74 wahlweise einzeln oder beide geöffnet oder geschlossen werden. In bevorzugter Ausführungsform ist während eines länger dauernden Sprühbeschichtungsbetriebes das Verschlußelement 74.3 zu dem Zyklon 46 geöffnet und das Verschlußelement 74.2 zur Filtereinrichtung 50 geschlossen; während der Reinigung der Kabine sind beide Verschlußelemente 74.3 und 74.2 geöffnet, damit aus der Kabine 4 ein stärkerer Luftstrom abgesaugt werden kann, wobei während der Reinigung die Drehzahl des Sauggebläses 52 erhöht wird.

Während kurz dauerndem Sprühbeschichtungsbetrieb oder häufigem Wechsel von einer Pulversorte auf eine andere Pulversorte ist eine weitere Betriebsart möglich: Der gesamte Kabinenboden 234 wird durch einen Deckel geschlossen, das Verschlußelement 74.3 des Zyklons 46 wird geschlossen, und das Verschlußelement 74.2 der Filtereinrichtung 50 wird geöffnet, so daß das Saugebläse 52 nur durch den Ring-Schlitz 270 des Pulverauslasses 268 Pulver aus der Kabine 4 absaugen kann.

Der Ring-Schlitz 270 saugt Luft aus der Kabine 4 rechtwinklig zu ihrer Mittelachse 16.

In abgewandelter Ausführungsform sind die beiden Pulverabsaugleitungen 44 und 74 an getrennte Saugquellen oder Sauggebläse angeschlossen.

## Patentansprüche

1. Sprühbeschichtungsvorrichtung zum Sprühbeschichten von Objekten mit Beschichtungspulver, enthaltend eine Kabine, welche einen Beschichtungsraum bildet; Pulversammelmittel zum Sammeln und Abführen von Beschichtungspulver, welches im Beschichtungsraum versprüht wurde, jedoch an dem zu beschichtenden Objekt nicht haftet und deshalb in der Kabine nach unten fällt und im folgenden Überschußpulver genannt wird,
**dadurch gekennzeichnet,** daß
die Pulversammelmittel innere Sammelmittel (34.2; 234) und äußere Sammelmittel (34.1, 66, 68; 268) aufweisen, um mittels der inneren Sammelmittel von im wesentlichen dem gesamten Kabinenboden (42; 234) Überschußpulver in einen Pulverbehälter (56) abzuführen und um, getrennt davon, mittels der äußeren Sammelmittel vom Übergangsbereich zwischen dem Kabinenboden und der Kabinenwand (10), am Kabinenboden und/oder in der Kabinenwand, Überschußpulver, welches von der Kabinenwand (10) abfällt, abzusaugen, wobei die äußeren Sammelmittel einen um den gesamten Kabinenumfang sich erstreckenden Pulverauslaß (268) aufweisen, der an eine außerhalb der Kabine (4) angeordnete Pulverabsaugvorrichtung (74, 50, 52) angeschlossen ist.

2. Sprühbeschichtungsvorrichtung nach Anspruch 1,
**dadurch gekennzeichnet,** daß
auch die inneren Sammelmittel (34.2; 234) an eine Pulverabsaugvorrichtung (44, 46, 48, 50, 52) zum Absaugen des von ihnen aufgefangenen Überschußpulvers angeschlossen sind.

3. Sprühbeschichtungsvorrichtung nach Anspruch 2,
**dadurch gekennzeichnet,** daß
die Pulverabsaugvorrichtung (44, 46, 48, 50 52, 54, 56) der inneren Sammelmittel (34.2; 234) eine Pulverrückgewinnungsvorrichtung zur Rückgewinnung und Wiederverwendung des Überschußpulvers ist.

4. Sprühbeschichtungsvorrichtung nach einem der Ansprüche 1 bis 3,
**dadurch gekennzeichnet,** daß
die inneren Sammelmittel (34.2; 234) strömungsmäßig (42, 44) an den Saugeingang eines ersten Pulverabscheiders (46), vorzugsweise mindestens ein Zyklon, angeschlossen sind, welcher zurückgewonnenes Überschußpulver aus einem Saugluftstrom abscheidet zur Wiederverwendung dieses Überschußpulvers, daß ein Saugausgang des ersten Pulverabscheiders (46) strömungsmäßig (48) an den Saugeingang eines zweiten Pulverabscheiders (50), vorzugsweise ein Filter, angeschlossen ist, zum Aussieben von Rest-Überschußpulver aus einem Saugluftstrom, und daß an einen Saugausgang des zweiten Pulverabscheiders (50) ein Sauggebläse (52) angeschlossen ist, daß die äußeren Sammelmittel (34.1; 66, 68; 268) strömungsmäßig (66, 68, 74) an den Saugeingang des zweiten Pulerabscheiders (50) angeschlossen sind zum Absaugen des von ihnen aufgefangenen Überschußpulvers.

5. Sprühbeschichtungsvorrichtung nach einem der vorhergehenden Ansprüche,
**dadurch gekennzeichnet,** daß
die inneren Sammelmittel (34.2; 234) einen nach unten enger werdenden Sammeltrichter (42; 234) aufweisen, welcher einen Kabinenboden bildet und am unteren Trichterzentrum mit einer Pulverauslaßöffnung (44) versehen ist.

6. Sprühbeschichtungsvorrichtung nach einem der vorhergehenden Ansprüche,
**dadurch gekennzeichnet,** daß
die äußeren Sammelmittel (268) einen in der Kabinenwand (10) gebildeten, sich um den ganzen Kabinenumfang erstreckenden Saug-Pulverauslaß (268) zur Erzeugung eines Pulver-Luft-Absaugstromes um den gesamten Kabinen-Innenumfang (16) herum radial vom Kabinenzentrum (16) zur Kabinenwand (10) hin aufweisen.

7. Sprühbeschichtungsvorrichtung nach einem der vorhergehenden Ansprüche,
**dadurch gekennzeichnet,** daß
die Kabine (4), im Horizontalschnitt gesehen, eine kreisrunde zylindrische Form hat.

8. Sprühbeschichtungsvorrichtung nach einem der vorhergehenden Ansprüche,
**dadurch gekennzeichnet,** daß
Reinigungsmittel (150; 152; 154; 156) zum automatischen Reinigen der Innenfläche (40) der Kabinenwand (10) vorgesehen sind.

9. Verfahren zum Sprühbeschichten von Objekten mit Beschichtungspulver in einer Kabine und zum Reinigen der Kabine sowie zum Sammeln und Austragen von versprühtem, am Objekt nicht haftenden Überschußpulver aus der Kabine,
**dadurch gekennzeichnet,** daß
erstes Überschußpulver, welches die Wandinnenflächen der Kabine nicht berührt hat, und zweites Überschußpulver, welches die Wandinnenflächen der Kabine berührt hat, getrennt gesammelt und aus der Kabine ausgetragen wird, wobei das die Wandinnenflächen berührende zweite Überschußpulver einen kleinen Anteil von Wandinnenflächen nicht-berührendem Überschußpulver enthalten kann, jedoch das erste Überschußpulver kein die Wandinnenflächen berührendes Überschußpulver enthält.
